# EUROPÄISCHE PATENTSCHRIFT

(11) **EP 2 283 227 B1**
(45) Veröffentlichungstag und Bekanntmachung des Hinweises auf die Patenterteilung: **26.09.2012**
(21) Anmeldenummer: 09741928.7
(22) Anmeldetag: 06.03.2009
(51) Int. Cl.: F02M 59/46, F16K 15/02, F16K 27/02, B21J 3/00, F02M 63/00

(54) **FEDERHALTEHÜLSE**
SPRING RETAINING SLEEVE
DOUILLE DE MAINTIEN DE RESSORT

(30) Priorität: 06.05.2008 DE 102008001572
(43) Veröffentlichungstag der Anmeldung: 16.02.2011
(73) Patentinhaber: Robert Bosch GmbH, 70442 Stuttgart (DE)
(72) Erfinder: Santamaria, Angelo, 73730 Esslingen (DE); Aleker, Jochen, 70499 Stuttgart (DE)
(86) Internationale Anmeldenummer: PCT/EP2009/052684
(87) Internationale Veröffentlichungsnummer: WO 2009/135710

(56) Entgegenhaltungen:
- EP-A- 0 800 100
- EP-A- 1 467 086
- WO-A-2004/083696
- DE-A1- 10 158 503
- DE-A1-102005 024 042
- DE-A1-102005 055 360
- GB-A- 592 524
- US-A1- 2005 051 218
- US-B1- 6 497 247
- NORDEX ET AL: 'Nordex Dowel pins catalogue', [Online] 15 Mai 2005, XP055010719 Gefunden im Internet: <URL:http://web.archive.org/web/20050515172 628/http://www.dowelpins.biz/pdf/E024 Dowel Pin Hardened Press Fit Type Inch & Metric Sizes.pdf> [gefunden am 2011-10-28]
- NIEMANN G ED - NIEMANN ET AL: "Maschinenelemente. Bd. 1: Konstruktion und Berechnung von Verbindungen, Lagern, Wellen, passage", 1 January 1981 (1981-01-01), MASCHINENELEMENTE. BD. 1: KONSTRUKTION UND BERECHNUNG VON VERBINDUNGEN, LAGERN, WELLEN, SPRINGER VERLAG, PAGE(S) 368 - 369, XP007919657, ISBN: 978-3-540-06809-9

## Beschreibung

Die Erfindung betrifft eine Federhaltehülse gemäß dem Oberbegriff des Anspruchs 1.

Die Federhaltehülse gehört zu einem Kraftstoffhochdruckventil einer Kraftstoffhochdruckpumpe mit einer Aufnahmebohrung für das Kraftstoffhochdruckventil. In der Aufnahmebohrung ist ein Ventilschließkörper des Kraftstoffhochdruckventils gegen die Vorspannkraft einer Ventilfeder hin und her bewegbar aufgenommen. Die Ventilfeder ist zwischen dem Ventilschließkörper und der Federhaltehülse eingespannt, die in die Aufnahmebohrung eingepresst ist.

Eine solche Federhaltehülse ist durch die US 6 497 247 B1 und die DE 102005 024042 A1 bekannt. Diese Federhaltehülse weist eine Zylinderpressverbindungsfläche, einen Pressdurchmesser und eine Presslänge auf. An mindestens einem Ende der Zylinderpressverbindungsfläche ist eine Einführfase für lange Pressverbände mit einem Verhältnis von Pressdurchmesser zu Presslänge vorgesehen, das größer als 35 Prozent ist. Nachteilig bei dieser bekannten Federhaltehülse ist, dass infolge von Koaxialitätsfehlern zwischen Einführdurchmesser und Pressdurchmesser unter Umständen beim Einpressvorgang Zittereffekte und Fresser auftreten können. Hierdurch kann die Haltbarkeit der Pressverbindung beeinträchtigt werden.

### Offenbarung der Erfindung

### Vorteile der Erfindung

Die Federhaltehülse mit den Merkmalen des Anspruchs 1 hat demgegenüber den Vorteil, dass durch den optimierten Winkel der Einführphase und die Schmiernut der Einpressvorgang der Federhaltehülse verbessert ist, wobei auf eine aufwendige Minimierung der Koaxialitätsfehler verzichtet werden kann und ein Verrutschen der Federhaltehülse während der gesamten Lebensdauer vermieden werden kann.

Ein bevorzugtes Ausführungsbeispiel der Federhaltehülse ist dadurch gekennzeichnet, dass die Schmiernut in Umfangsrichtung verläuft. Bei der Schmiernut handelt es sich vorzugsweise um eine umlaufende Ringnut.

Ein weiteres bevorzugtes Ausführungsbeispiel der Federhaltehülse ist dadurch gekennzeichnet, dass die Schmiernut im Querschnitt die Gestalt eines Kreisbogens aufweist. Diese Gestalt hat sich im Rahmen der vorliegenden Erfindung als besonders vorteilhaft erwiesen.

Ein weiteres bevorzugtes Ausführungsbeispiel der Federhaltehülse ist dadurch gekennzeichnet, dass die Schmiernut in der Mitte der Zylinderpressverbindungsfläche angeordnet ist. Es können auch mehrere Schmiernuten zentrisch oder symmetrisch versetzt zueinander angeordnet sein.

Weitere Vorteile, Merkmale und Einzelheiten der Erfindung ergeben sich aus der nachfolgenden Beschreibund, in der unter Bezugnahme auf die Zeichnung verschiedene Ausführungsbeispiele im Einzelnen beschrieben sind.

### Kurze Beschreibung der Zeichnung

Es zeigen:
- Figur 1: einen zylinderkopf einer Kraftstoffhochdruckpumpe im Schnitt;
- Figur 2: einen vergrößerten Ausschnitt II aus Figur 1;
- Figur 3: eine nicht erfindungsgemäße Federhaltehülse mit einer Einführfase von 5 Grad;
- Figur 4: die Federhaltehülse aus Figur 3 mit dem Einfluss eines Koaxidialitätsfehlers;
- Figur 5: zwei vergrößerte Ausschnitte aus den Figuren 3 und 4;
- Figur 6: eine ähnliche Darstellung wie in Figur 5 mit einem Einführfasenwinkel von etwa 20 Grad;
- Figur 7: eine Darstellung der Auswirkung einer unterschiedlichen Pressflächenverteilung;
- Figur 8: eine Federhaltehülse gemäß einem erfindungsgemäßen Ausführungsbeispiel mit einer Schmiernut und
- Figur 9: die Darstellung eines Schnitts entlang der Linie IX-IX in Figur 8.

### Beschreibung des Ausführungsbeispiels

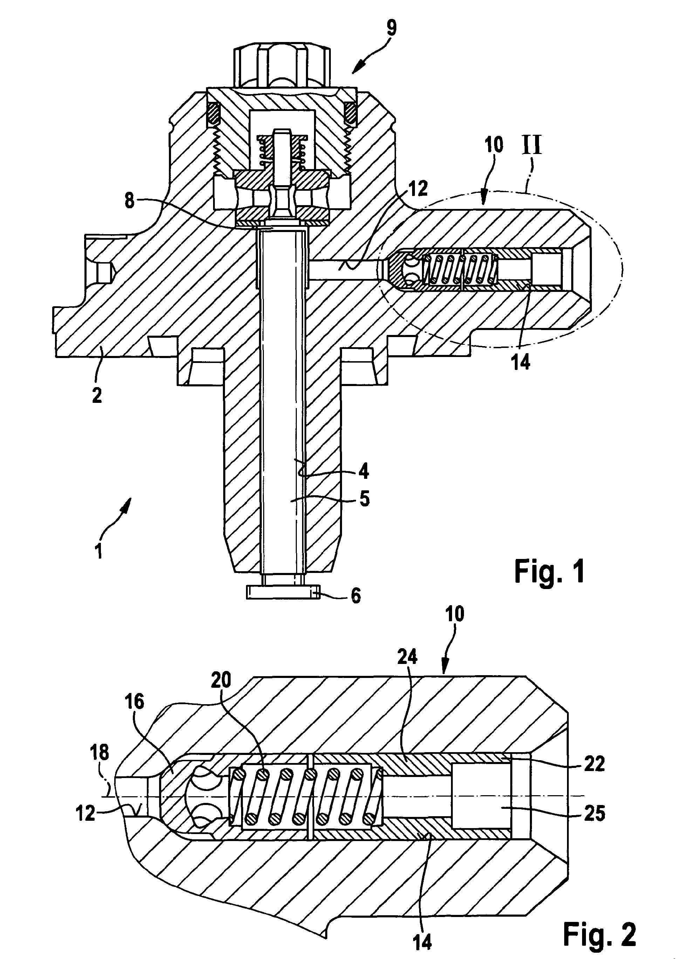

In Figur 1 ist ein zylinderkopf 2 einer Kraftstoffhochdruckpumpe 1 im Schnitt dargestellt. Der Zylinderkopf 2 umfasst eine Zylinderbohrung 4, in der ein Hochdruckkolben 5 hin und her bewegbar aufgenommen ist. Der Hochdruckkolben 5 weist an einem Ende einen Kelbenfuß 6 auf, der, zum Beispiel durch einen Antriebsnocken einer (nicht dargestellten) Antriebswelle, angetrieben ist.

Das andere Ende des Hochdruckkolbens 5 begrenzt in der Zylinderbohrung 4 einen Hochdruckraum 8, der über ein Saugventil 9 mit Kraftstoff befüllt wird. Der Kraftstoff wird durch den Hochdruckkolben 5 in dem Hochdruckraum 8 mit flochdruck beaufschlagt und über ein Hochdruckventil 10 zum Beispiel einer Kraflsloffeinspritzeinrichtung einer Brennkraftmaschine zugeführt. Das Hochdruckventil 10 ist in eine Aufnahmebohrung 14 des Zylinderkopfs 2 angeordnet. Die Aufnahmebohrung 14 steht über einen Hochdruckkanal 12 mit dem Hochdruckraum 8 in Verbindung.

Tn Figur 2 ist der Ausschnitt II aus Figur mit dem Hochdruckventil 10 vergrößert dargestellt. In der vergrößerten Darstellung sieht man, dass ein Ven-Lilschließkörper 16 hin und her bewegbar in der Aufnahmebohrung 14 geführt ist. Der Ventilschließkörper 16 dient dazu, einen Ventilsitz geschlossen zu halten oder gezielt freizugeben, um mit Hochdruck beaufschlagten Kraftsloff aus dem Hochdruckraum 8 über das Hochdruckventil 10 abzuführen. Zu diesem Zweck ist der Schließkörper 16 entlang einer Längsachse 18 gegen die Vorspannkraft einer Ventilfeder 20 hin und her bewegbar.

Die Ventilfeder 20 ist an beziehungsweise in einer Federhaltehülse 22 abgestützt beziehungsweise geführt. Die Federhaltehüs 22 umfasst einen Grundkörper 24 mit einem zentralen Durchgangsloch 25 und ist in die Aufnahmebohrung 14 den Zylinderkopfs 2 eingepresst.

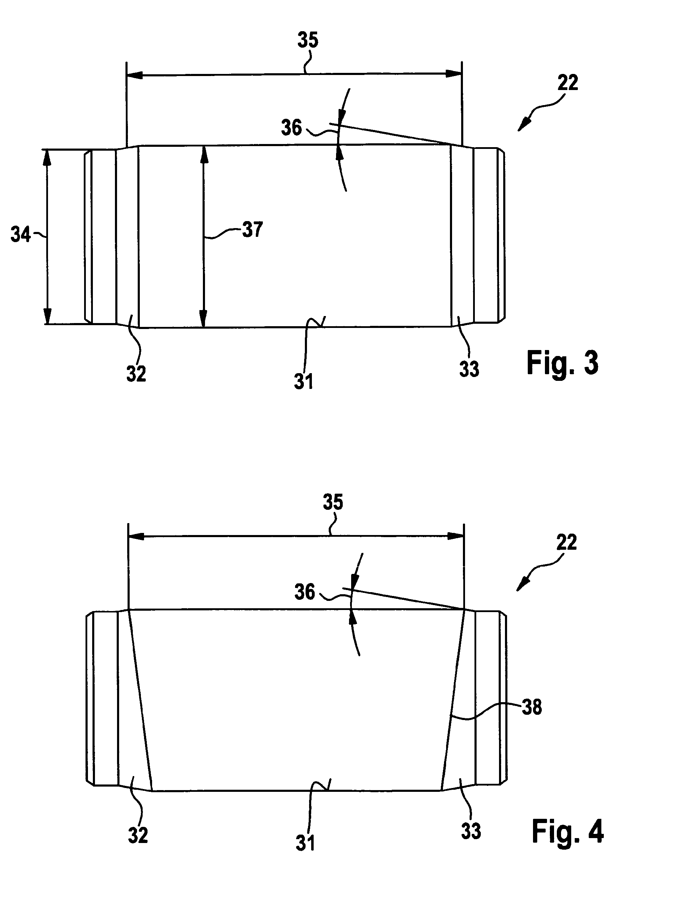

In den Figuren 3 und 4 ist die nicht erfindungsgemäße Federhaltehülse 22 mit einer zylinderpressverbindungsfläche 31 dargestellt, die im Wesentlichen die Gestalt eines geraden Kreiszylindermantels aufweist. An den Enden der Zylinderpressverbindungsfläche 31 ist jeweils eine Einführfase 32, 33 vorgesehen. Durch eine Bema-Bungslinie 34 ist der Pressdurchmesser angegeben.

Durch eine weitere Bemaßungslinie 35 ist die Presslänge der Zylinderpressverbindungsflache 31 angegeben.

Ein Einführfasenwinkel der Einfürfase 33 ist mit 36 bezeichnet. Der Einführfasenwinkel 36 hat in den Figuren 3 und 4 eine Größe 5 Grad plus/minus 1 Grad. Durch eine weitere Bemaßungslinie 37 ist der Einführdurchmesser angegeben. Bei dem in Figur 3 dargestellten Ausführungsbeispiel ist der Koaxialitätsfehler gleich Null. In Figur 4 isL der Einfluss eines Koaxialitätsfehlers von 0,025 durch eine Linie 38 verdeutlicht.

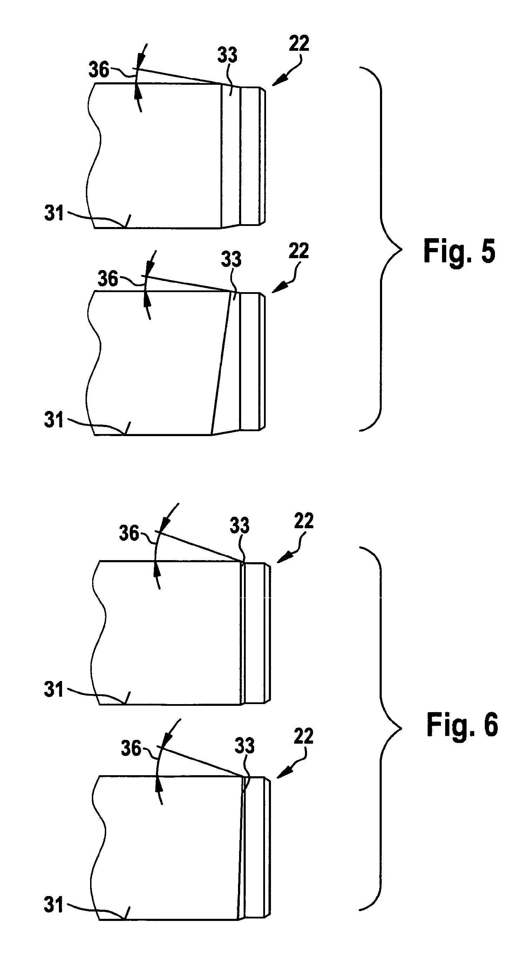

In Figur 5 ist der Einfluss des Koaxialitätsfehlers bei einem Einführfasenwinkel 36 von 5 Grad plus/minus 1 Grad dargestellt. In Figur 6 ist im Vergleich dazu der Einfluss des Koaxialitätsfehlers bei einem Einführfasenwinkel 36 von 20 Grad plus/minus zwei Grad dargestellt.

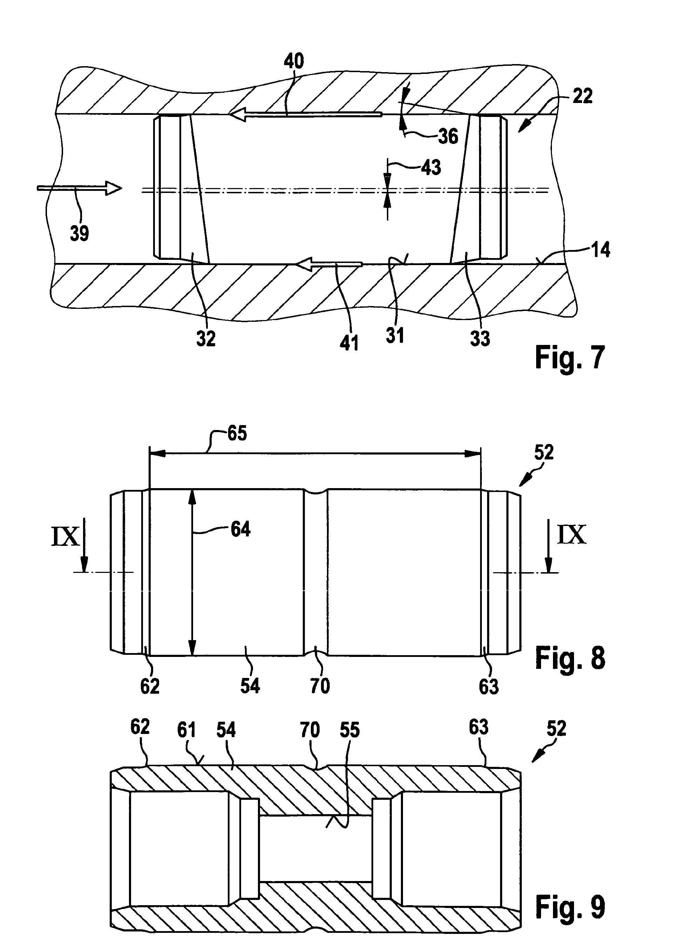

In Figur 7 ist die Federhaltehülse 22 beim Einpressen in die Aufnahmebohrung 14 dargestellt. Die Einpressrichtung ist durch einen Pfeil 39 angegeben. Durch weitere Pfeile 40 und 41 sind Kräfte angedeutet, die sich aufgrund eines vorhandenen Koaxiali-Lätsfehlers 43 von 0,025 ergeben. Die unterschiedliche Größe der Kräfte 40 und 41 ergibt sich aus einer unterschiedlichan Presst lächenverteilung, die durch den Koaxialitätsfehler 43 bewirkt wird. Durch die unterschiedliche Verteilung der Einpresskräfte können während des Einpressvorgangs Verkippungen und Drehmomente auftreten.

Durch die erfindungsgemäße Waht eines Einführfasenwinkels 36 von 18 bis 22 Grad, insbesondere von etwa 20 Grad, kann auf einfache Art und Weise sichergestellt werden, dass die eingepresste Felderhaltehülse, die auch als Federhalter bezeichnet wird, während der gesamten Lebensdauer ihre Position beibehält und nicht verrutscht. Dadurch kann im Betrieb des Hochdruckventils eine notwendige Durchflussrate gewährleistet werden.

Durch die Geometrie des Federhalters beziehungsweise der Federhaltehülse wird die Vorspannung der Ventilfeder und somit der Öffnungsdruck des Hochdruckventils eingestellt. Damit die Federhaltehülse über die gesamte Lebensdauer ihre Position nicht verändert, muss der Pressverband mit ausreichender Sicherheit die auftretenden und mit zunehmender Durchströmungsrate steigenden Strömungskräfte, die während des Ventilöffnung- und Ventilschließvorgangs größer als 2.000 Newton sein können, aufnehmen können.

Die aufzununehmenden Kräfte des Pressverbands können zum Beispiel durch die Länge des Pressverbands sowie durch den Pressdurchmesser und ein daraus resultierendes Pressübermaß der Presspartner erböht werden. Bei zu langen Pressverbänden kann sich die gleichmäßige Versorgung der gesamten Presslänge mit Schmiermittel, insbesondere mit. Öl, während des Einpreasvorgangs als schwierig erweisen.

Im Rahmen der vorliegenden Erfindung wurde als Grenzwert für das Verhältnis Pressdurchmesser zu Fresslänge ein Prozentsatz von 35 Prozent herausgefunden. Das heißt, bei einer Presslänge von 9 mm betragt der Crenzdurchmesser circa 5, 85 mm. Bei 60 Prozent beträgt der Vrenzdurchmesser 3,6 mm. Bei Überschreitung des Grenzdurchmessers besteht die Gefahr von unterschiedlich verteilten und Lokal erhöhten Reibwerten. Dadurch kann es zu Zittereffekten und letztlich zu einem unerwünschten Fressen während des Einpressvorgangs komunen.

Darüber hinaus tritt bei den vorab bezeichneten, relativ langen Pressverbänden verstärkt ein unerwünschter Einfluss von Koaxialitätsfehlern auf. Aufgrund der unvermeidbaren Koaxialitätsfehler kommt es neben den vorab beschriebenen Zittereffekten und Fresseffekten während des Einpressvorgangs auch zu einer unerwünscht hohen mechanischen Belastung einer zum Einpressen verwendeten Montagevorrichtung. Ab einem bestimmten Pressübermaß verformt sich zudem der schwächere Presspartner plastisch. Ein rein elastischer Pressverband hat demgegenüber den Vorteil, dass Dehneftekte, die zum Beispiel bei. Temperaturunterschieden auftreten können, zum Teil ausgeglichen werden können.

In den Figuren 8 und 9 ist eine erfindungsgemäße Federhaltehülse 52 mit einem Grundkörper 54 in verschiedenen Ansichten dargestellt. Der Grundkörper 54 umfasst ein zentrales Durchgangsloch 55. Des Weiteren umfasst der Grundkörper 54 eine Zylinderpressverbindangs fläche 61, die an den Enden jeweils eine Einführfase 62, 63 aufweist. Durch eine Bemaßungsligie 64 ist der Pressdurchmessor angegeben. Durch eine weitere Bemaßungslinic: 65 ist die Presslänge der Pressverbindungsfläche 31 angegeben.

Bei dem in den Figuren 8 und 9 dargestellten Ausführungsbeispiel ist in der Mitte der Zylinderpressverbindungsfläche 31 eine Schmiernut 70 vorgesehen, die als umlaufende Ringnut ausgeführt ist. Die Ringnut hat einen Ringnutquerschnitt, der die Gestalt eines Kreisbogens aufweist. Die Schmiernut 70 stellt beim Einpressen der Federhaltehülse 52 ein Schmiermittelreservoir, insbesondere Ölreservoir, dar, das während des Einpressvorgangs Schmiermittel abgibt. Dadurch kann beim Einpressen eine nahezu konstante Reibung sichergestellt werden.

## Patentansprüche

1. Federhaltehülse mit einer Zylinderpressverbindungsfläche (31;61), die einen Pressdurchmesser (34;64) und eine Presslänge (35;65) aufweist, wobei an mindestens einem Ende der Zylinderpressverbindungsfläche (31;61) eine optimierte Einführfase (32,33;62,63) für lange Pressverbände mit einem Verhältnis von Pressdurchmesser (34;64) zu Presslänge (35;65) vorgesehen ist, das größer als 35 Prozent ist, **dadurch gekennzeichnet, dass** die Einführfase (32,33;62,63) einen Winkel (36) aufweist, der in einem Bereich von 18 bis 22 Grad liegt, und dass die Zylinderpressverbindungsfläche (31;61) mindestens eine Schmiernut (70) aufweist, die ein Schmiermittelreservoir bildet, das während des Einpressvorgangs Schmiermittel abgibt.

2. Federhaltehülse nach Anspruch 1, **dadurch gekennzeichnet, dass** die Schmiernut (70) in Umtangsrichtung verläuft.

3. Federhaltehülse nach Anspruch 1 oder 2, **dadurch gekennzeichnet, dass** die Schmiernut (70) im Querschnitt die Gestalt eines Kreisbogens aufweist.

4. Federhaltehülse nach einem der Ansprüche 1 bis 3, **dadurch gekennzeichnet, dass** die Schmiernut (70) in der Mitte der Zylinderpresverbindungsfläche (61) angeordnet ist.

## Claims

1. Spring retaining sleeve with a cylinder press-fit surface (31; 61) which has a press diameter (34; 64) and a press length (35; 65), there being provided at at least one end of the cylinder press-fit surface (31; 61) an optimized lead-in chamfer (32, 33; 62, 63) for long press fits, with a ratio of press diameter (34; 64) to press length (35; 65) which is greater than 35 percent, **characterized in that** the lead-in chamfer (32, 33; 62, 63) has an angle (36) which lies in a range of 18 to 22 degrees, and **in that** the cylinder press-fit surface (31; 61) has at least one lubricating groove (70) forming a lubricant reservoir which dispenses lubricant during the pressing-in operation.

2. Spring-retaining sleeve according to Claim 1, **characterized in that** the lubricating groove (70) runs in the circumferential direction.

3. Spring-retaining sleeve according to Claim 1 or 2, **characterized in that** the lubricating groove (70) has in cross section the configuration of an arc of a circle.

4. Spring retaining sleeve according to one of Claims 1 to 3, **characterized in that** the lubricating groove (70) is arranged in the middle of the cylinder press-fit surface (61).

## Revendications

1. Douille de maintien de ressort comprenant une surface d'ajustement serré cylindrique (31 ; 61) qui présente un diamètre d'ajustement serré (34 ; 64) et une longueur d'ajustement serré (35 ; 65), un biseau d'insertion (32, 33 ; 62, 63) optimisé étant prévu à au moins une extrémité de la surface d'ajustement serré cylindrique (31 ; 61) pour des joints à ajustement serré longs présentant un rapport entre le diamètre d'ajustement serré (34 ; 64) et la longueur d'ajustement serré (35 ; 65) qui est supérieur à 35 pour cent, **caractérisée en ce que** le biseau d'insertion (32, 33 ; 62, 63) présente un angle (36) qui se situe dans une plage de 18 à 22 degrés, et **en ce que** la surface d'ajustement serré cylindrique (31 ; 61) comprend au moins une rainure de lubrification (70) qui forme un réservoir de lubrifiant qui fournit du lubrifiant pendant l'opération d'enfoncement.

2. Douille de maintien de ressort selon la revendication 1, **caractérisée en ce que** la rainure de lubrification (70) s'étend dans la direction périphérique.

3. Douille de maintien de ressort selon la revendication 1 ou 2, **caractérisée en ce que** la rainure de lubrification (70) présente en section transversale la forme d'un arc de cercle.

4. Douille de maintien de ressort selon l'une quelconque des revendications 1 à 3, **caractérisée en ce que** la rainure de lubrification (70) est disposée au centre de la surface d'ajustement serré cylindrique (61).
